# FASCICULE DE BREVET EUROPEEN

(11) **EP 2 779 873 B1**
(45) Date de publication et mention de la délivrance du brevet: **21.03.2018**
(21) Numéro de dépôt: 12794420.5
(22) Date de dépôt: 30.10.2012
(51) Int. Cl.: A47J 19/02

(54) **APPAREIL ELECTROMENAGER DE PREPARATION CULINAIRE COMPORTANT UNE VIS DE PRESSAGE**
ELEKTRISCHE LEBENSMITTELZUBEREITUNGSVORRICHTUNG MIT EINER DRUCKSCHRAUBE
ELECTRICAL FOOD PREPARATION DEVICE COMPRISING A PRESSING SCREW

(30) Priorité: 14.11.2011 FR 1160342
(43) Date de publication de la demande: 24.09.2014
(73) Titulaire: SEB S.A., 69130 Ecully (FR)
(72) Inventeur: RAUDE, Christian, F-64160 Buros (FR); SENTAGNES, Clémence, F-65000 Tarbes (FR)
(74) Mandataire: Cémeli, Eric Philippe Laurent
(86) Numéro de dépôt international: PCT/FR2012/052521
(87) Numéro de publication internationale: WO 2013/072597

(56) Documents cités:
- WO-A1-2012/062988
- WO-A2-2010/007290
- US-A- 5 906 154
- US-A1- 2004 231 529

## Description

La présente invention concerne de manière générale les appareils de préparation de jus à partir de fruits et/ou légumes. En particulier, l'invention concerne un appareil de préparation culinaire comprenant une vis de pressage, agencée dans une enceinte de travail et mise en rotation par un moteur agencé dans un boîtier adjacent.

Il est connu dans l'art antérieur des appareils d'extraction de jus.

Le document WO 2007148872 présente un appareil de pressage comprenant un boîtier moteur avec une enceinte de travail accouplée au boîtier. L'enceinte de travail se compose notamment d'un récipient de travail, fermé lors de l'utilisation par un couvercle comportant une goulotte d'alimentation. Les aliments sont pressés par une vis de pressage agencée dans un filtre positionné et fixé dans le récipient de travail. En contrepartie, ce système présente notamment l'inconvénient d'être compliqué à utiliser. En effet, pour des raisons d'hygiène, tous les composants logés dans l'enceinte de travail sont démontables pour être nettoyés. Il en résulte une complexité d'assemblage pour l'utilisateur avant chaque utilisation. Tous les composants sont à positionner les uns relativement aux autres, car en raison des efforts subis lors du pressage, il faut que le filtre soit maintenu en rotation par rapport à la vis de pressage. Il faut également que la vis de pressage soit maintenue axialement par rapport au filtre. Il en résulte une mise en place fastidieuse de chaque élément relativement à l'autre pour les indexer et verrouiller lors du montage. Enfin, tous les efforts appliqués lors du pressage sur le filtre ou sur le couvercle passent par le récipient ou le couvercle de l'enceinte de travail, et les matériaux ou les épaisseurs doivent être prévus pour résister à ces efforts. Il en résulte un coût de fabrication important.

Le document CN101849762 propose de réaliser un appareil du type précité comportant une enceinte de travail présentant un récipient de travail en deux parties. Cette mise en oeuvre augmente le nombre de composants, de sorte que le coût de fabrication est impacté négativement, et l'utilisateur doit cependant positionner et verrouiller la pièce de reprise d'effort par rapport au boîtier, puis positionner, indexer et verrouiller le filtre par rapport à cette pièce. La mise en opération de cet appareil est donc fastidieuse pour l'utilisateur, et ce avant chaque utilisation.

Le document WO 2010/007290 divulgue un appareil électroménager de préparation culinaire selon le préambule de la revendication 1 telle que déposée.

Un but de la présente invention est de répondre aux inconvénients des documents de l'art antérieur mentionnés ci-dessus et en particulier, tout d'abord, de proposer un appareil de pressage à vis dont la mise en opération est simple, tout en ayant des composants simples et bon marché pour réaliser l'enceinte de travail.

Ce but est atteint avec un appareil électroménager de préparation culinaire comportant un boîtier logeant un moteur et supportant une enceinte de travail comportant un couvercle, l'enceinte de travail contenant un filtre amovible, une tête de pressage entraînée en rotation par le moteur étant agencée de manière amovible dans le filtre, la tête de pressage comprenant une vis de pressage, le filtre présentant une ouverture pour la mise en place de la tête de pressage, l'ouverture étant agencée en regard du couvercle, du fait que le filtre est bloqué en rotation sur le boîtier, et que le couvercle est assemblé et verrouillé avec le filtre pour former une enceinte de filtration contenant la tête de pressage. Les efforts appliqués par la vis de pressage sur le couvercle sont repris par le filtre, lui-même bloqué en rotation sur le boîtier. L'enceinte de travail peut être réalisée avec des matériaux plus fins ou moins coûteux.

Avantageusement alors, le couvercle est monté directement sur le filtre. Une construction particulèrement simple peut ainsi être obtenue.

Avantageusement, le filtre est verrouillé et monté directement sur le boîtier pour un maintien en position du filtre dans l'enceinte de travail. Cette mise en oeuvre permet de simplifier l'enceinte de travail car le filtre est en contact direct avec le boîtier pour y être monté et verrouillé. Le montage pour l'utilisateur est également facilité car le filtre sert de référence unique pour le montage du couvercle.

Avantageusement, l'enceinte de travail comporte un récipient de travail et le couvercle est directement monté et verrouillé sur le récipient de travail pour être maintenu en position fermée sur l'enceinte de travail maintenue en place sur le boîtier par le filtre. L'invention tire avantageusement parti du positionnement du filtre sur le boîtier, de sorte que le filtre sert de maintien en place sur le boîtier pour l'enceinte de travail. La présente invention utilise la structure du filtre initialement très résistant (pour résister aux efforts de pressage), afin de maintenir en place l'enceinte de travail qui supporte le couvercle.

Plus particulièrement, le filtre présente une ouverture pour la mise en place de la tête de pressage, l'ouverture étant agencée en regard du couvercle.

Avantageusement, l'enceinte de travail est directement posée sur le boîtier. La reprise des efforts par le filtre selon l'invention permet cette simplification supplémentaire de la tête de pressage, car il n'y a plus d'efforts exercés sur l'enceinte par le couvercle.

Avantageusement, l'enceinte de travail comporte au moins une sortie d'évacuation. L'utilisation de l'appareil est simplifiée avec cette sortie d'évacuation.

Avantageusement, la ou au moins l'une des sorties d'évacuation est agencée à l'extérieur du filtre. En d'autres termes, la ou au moins l'une des sorties d'évacuations est prévue pour recueillir la partie des aliments ayant traversé le filtre. Si désiré, au moins une autre sortie d'évacuation peut être prévue pour recueillir la partie des aliments retenue par le filtre.

Avantageusement ladite au moins une sortie d'évacuation est en saillie et le boîtier comporte au moins une échancrure logeant au moins partiellement ladite au moins une sortie d'évacuation. La sortie d'évacuation sert avantageusement de blocage en rotation.

Avantageusement, l'enceinte de travail comporte un récepteur de jus inférieur posé sur le boîtier et un déflecteur de jus posé sur le récepteur de jus inférieur. Cette division en deux composants de l'enceinte de travail simplifie les outillages de fabrication, ainsi que le montage par l'utilisateur car il lui suffit de poser les éléments. Cette disposition permet également de simplifier le nettoyage.

Alternativement, l'enceinte de travail comporte un récepteur de jus inférieur posé sur le boîtier et un déflecteur de jus rapporté au couvercle. Ainsi la fonction de déflecteur de jus est intégrée au couvercle, ce qui permet d'avoir moins de composants à manipuler.

Avantageusement, la sortie d'évacuation est formée entre le récepteur de jus inférieur et le déflecteur de jus. Les outillages de fabrication sont simplifiés, car il n'y a qu'un demi-tube ouvert.

Avantageusement, le filtre comporte une embase et une zone de fixation sur le boîtier surélevée par rapport à l'embase, et la vis de pressage comporte un évidement central qui recouvre la zone de fixation du filtre. Cette mise en oeuvre permet d'empêcher toute fuite de jus vers le boîtier.

Avantageusement, la tête de pressage comporte un disque de découpe agencé entre le couvercle et la vis de pressage. L'efficacité de pressage est améliorée par le disque de découpe.

Avantageusement, l'appareil comporte un circuit de commande du moteur d'entraînement avec un coupe-circuit et le coupe-circuit est actionné par des moyens de commande coopérant avec le couvercle. La sécurité d'utilisation est garantie, le moteur ne pouvant pas fonctionner si le couvercle n'est pas en position fermée.

Avantageusement, les moyens de commande sont une tige agencée sur le filtre ou sur l'enceinte de travail. Cette mise en oeuvre est économique.

Avantageusement, le montage du filtre sur le boîtier est un montage de type quart de tour avec verrouillage. Cette mise en oeuvre est bien adaptée pour avoir une ergonomie d'utilisation correcte.

Avantageusement, le montage du couvercle sur le filtre est un montage de type quart de tour avec verrouillage. Cette mise en oeuvre est bien adaptée pour avoir une ergonomie d'utilisation correcte.

Avantageusement, le montage du filtre sur le boîtier est un montage de type ergot-baïonnette. Cette mise en oeuvre est économique.

Avantageusement, le montage du couvercle sur le filtre est un montage de type ergot-baïonnette. Cette mise en oeuvre est économique.

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 représente une coupe d'un appareil selon l'invention ;
- la figure 2 représente le filtre de l'appareil de la figure 1 ;
- la figure 3 représente un autre mode de réalisation de l'invention ;
- la figure 4 représente une variante de réalisation,
- la figure 5 est une vue en coupe de la variante de réalisation illustrée sur la figure 4,
- la figure 6 est une vue en coupe d'une enceinte de filtration de la variante de réalisation illustrée sur les figures 4 et 5,
- les figures 7 et 8 sont deux autres exemples de réalisation d'une enceinte de travail d'un appareil selon l'invention.

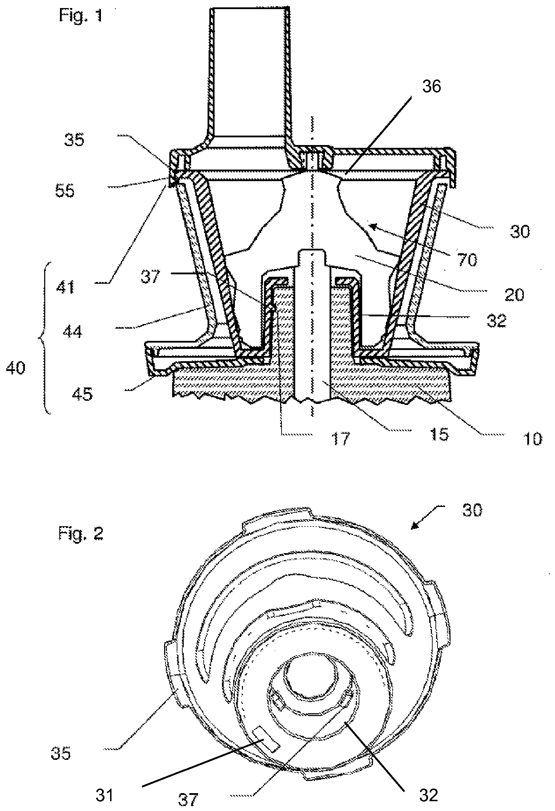

La figure 1 représente un appareil de préparation culinaire selon l'invention. Un boîtier 10 renferme un moteur non représenté, qui entraîne un axe de rotation 15 sortant du boîtier 10. Le boîtier 10 supporte une enceinte de travail 40. L'enceinte de travail 40 contient un filtre 30 tronconique et une tête de pressage 70. L'enceinte de travail 40 présente au moins une sortie d'évacuation, non représentée sur la figure 1.

Selon une disposition de l'invention, le filtre 30 est directement monté et verrouillé sur le boîtier 10 pour être maintenu en position dans l'enceinte de travail 40. Dans les exemples de réalisations illustrés sur les figures, le filtre 30 est monté directement sur le boîtier 10 par l'intermédiaire d'ergots primaires 37 coopérant avec des empreintes 17 du boîtier 10. Ces ergots primaires 37 suivant un montage de type baïonnette avec le boîtier 10 permettent un assemblage de type quart de tour aisé pour l'utilisateur, avec un verrouillage en position montée, de sorte que le filtre 30 est solidaire du boîtier 10 et peut transmettre correctement au boîtier 10 les efforts qui s'appliquent lors du pressage. En effet, une vis de pressage 20 agencée dans l'enceinte de travail 40 et entraînée par l'axe 15 exerce des efforts importants sur le filtre 30, mais ces efforts sont directement transmis au boîtier 10, du fait du montage direct du filtre 30 sur le boîtier 10. Ainsi le filtre 30 est directement monté et verrouillé sur le boîtier 10 pour être maintenu en position dans l'enceinte de travail 40.

Dans les exemples de réalisation illustrés sur les figures, l'enceinte de travail 40 est composée notamment d'un récepteur de jus inférieur 45 sur lequel est déposé un déflecteur de jus 44. L'invention évite de contraindre le récepteur de jus inférieur 45 et/ou le déflecteur de jus 44 et ces pièces peuvent alors être simplifiées ou réalisées dans des matières qui n'ont pas besoin d'être résistantes.

Dans l'exemple de réalisation illustré sur les figures 1 et 2, la tête de pressage 70 comprend la vis de pressage 20.

La vis de pressage 20 est agencée dans le filtre 30 amovible bloqué en rotation sur le boîtier 10. L'enceinte de travail 40 est fermée par un couvercle 41 qui comporte une goulotte d'alimentation.

Selon une autre disposition de l'invention, le filtre 30 comprend des moyens de reprise d'effort agencés pour reprendre des efforts appliqués sur le couvercle 41 par la tête de pressage 70. Dans les exemples de réalisations illustrés sur les figures, les moyens de reprise d'effort consistent en un verrouillage et un montage directs du couvercle 41 sur le filtre 30. Le couvercle 41 est monté directement sur le filtre 30, par l'intermédiaire d'ergots secondaires 35 du filtre 30 qui coopèrent avec des nervures 55 du couvercle 41. Les efforts appliqués au couvercle 41 pendant l'utilisation (les couples résultant de l'action de la vis de pressage 20 sur les aliments en butée sur la goulotte par exemple) sont transmis directement au filtre 30, ce qui permet de simplifier le déflecteur de jus 44 car aucun effort ne lui est transmis. Le montage du couvercle 41 sur le filtre 30 est du type ergot-baïonnette quart de tour et procure une bonne ergonomie d'utilisation, avec un verrouillage du couvercle 41 en position fermée.

Tel que bien visible sur la figure 1, le filtre 30 présente une ouverture 36 pour la mise en place de la tête de pressage 70. L'ouverture 36 est agencée en regard du couvercle 41. Ainsi, tel que représenté sur la figure 1, le couvercle 41 est assemblé et verrouillé avec le filtre 30 pour former une enceinte de filtration contenant la tête de pressage 70.

On peut envisager d'implanter une tige de commande (non représentée) dans le déflecteur de jus 44 ou dans le filtre 30, actionnée par une came du couvercle 41 et fermant un coupe-circuit de sécurité lorsque le couvercle 41 est en position fermée et verrouillée.

Enfin, les ergots primaires 37 sont agencés dans un bossage 32 du filtre 30 qui est surélevé par rapport à son embase pour supprimer tout risque de fuite du jus de pressage vers le boîtier 10 ou l'axe 15.

La figure 2 présente une vue isométrique de dessous du filtre 30. Les ergots primaires 37 sont agencés à l'intérieur du bossage 32 surélevé par rapport à l'embase du filtre 30. Ces ergots primaires 37 coopèrent avec des rainures ou empreintes 17 du boîtier 10 pour assurer un montage quart de tour avec verrouillage en position finale. De manière similaire, les ergots secondaires 35 coopèrent avec les nervures 55 du couvercle 41 pour le fixer et verrouiller en position fermée sur le déflecteur de jus 44. Le filtre 30 comporte une sortie de décharge de résidus 31, visible sur la figure 2.

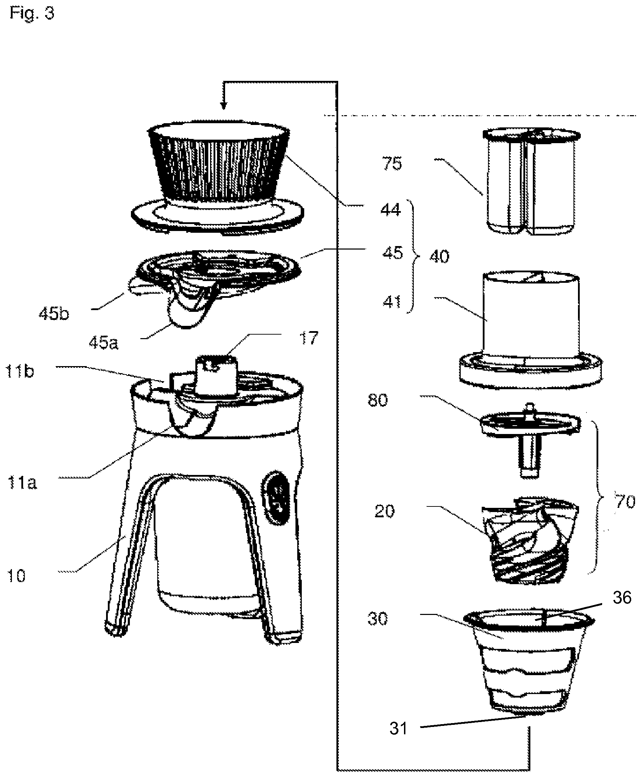

La figure 3 représente une vue éclatée d'un second mode de réalisation de l'invention. Un boîtier 10 comportant deux échancrures 11a et 11b supporte un récepteur de jus inférieur 45 comportant deux sorties d'évacuation 45a et 45b qui s'insèrent dans les échancrures 11a et 11b. Le déflecteur de jus 44 est posé sur le récepteur de jus inférieur 45 et forme avec le couvercle 41 l'enceinte de travail 40. La sortie d'évacuation 45a prévue pour l'évacuation du jus est agencée à l'extérieur du filtre 30 et forme avec le déflecteur de jus 44 un conduit en deux parties facilitant le nettoyage. L'enceinte de travail 40 contient le filtre 30 tronconique et une tête de pressage 70. La tête de pressage 70 entraînée en rotation par le moteur comprend une vis de pressage 20 et un disque de coupe 80. Un poussoir 75 peut aider l'utilisateur à insérer et pousser les aliments dans la goulotte du couvercle 41. Le filtre 30 est directement monté et verrouillé dans les empreintes 17 avec un montage quart de tour de type baïonnette de sorte que son montage sur le boîtier 10 est simple et permet de simplifier le récepteur de jus inférieur 45 qui est posé sur le boîtier 10. Le récepteur de jus inférieur 45 est bloqué en rotation par les échancrures 11a et 11b et en translation par le filtre 30, de sorte qu'il est correctement maintenu en place sur le boîtier 10. Le couvercle 41 présente une goulotte d'introduction d'aliments. Le couvercle 41 se monte par les ergots secondaires, non visibles sur la figure 3, sur le filtre 30.

Tel que bien visible sur la figure 3, le filtre 30 présente une ouverture 36 pour la mise en place de la tête de pressage 70. L'ouverture 36 est agencée en regard du couvercle 41. Ainsi, le couvercle 41 est assemblé et verrouillé avec le filtre 30 pour former une enceinte de filtration contenant la tête de pressage 70. Le filtre 30 comporte une sortie de décharge de résidus 31 débouchant au dessus de l'échancrure 11b.

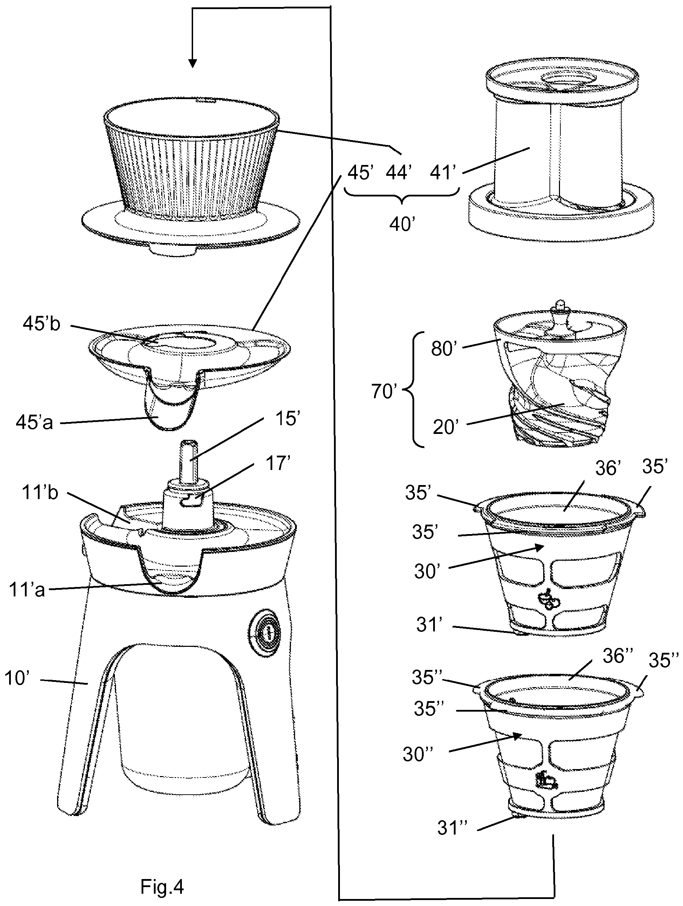

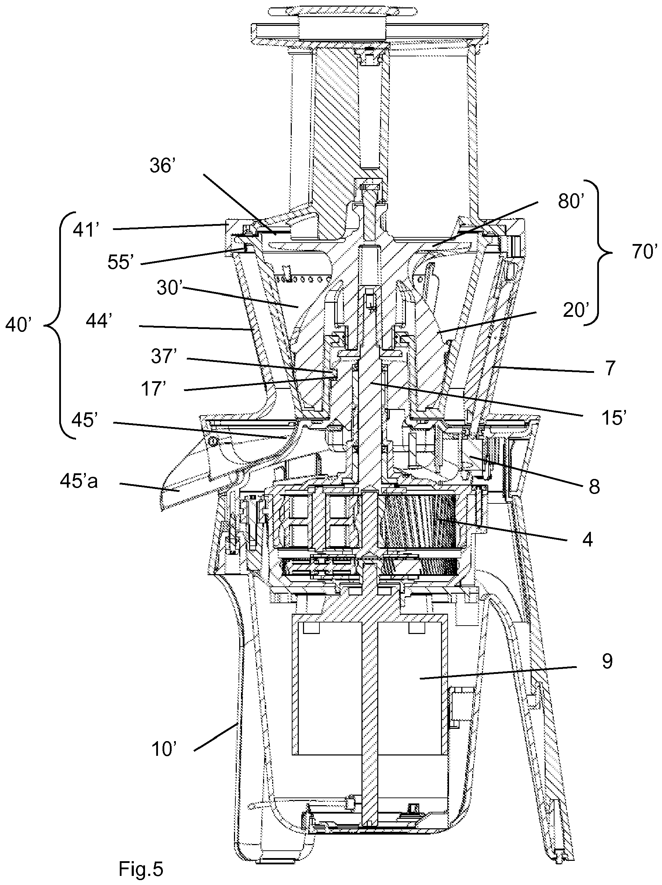

Les figures 4 et 5 illustrent un appareil de préparation culinaire selon l'invention comportant un boîtier 10' supportant une enceinte de travail 40' comportant un couvercle 41'. L'enceinte de travail 40' contient un filtre 30' ; 30" amovible bloqué en rotation sur le boîtier 10'. L'enceinte de travail 40' est fermée par le couvercle 41'.

Le boîtier 10' forme un socle sur lequel repose l'enceinte de travail 40'. Le boîtier 10' loge un moteur 9 électrique, représenté schématiquement. Le moteur 9 est relié à l'axe 15', si désiré par l'intermédiaire d'un dispositif de transmission 4.

Le filtre 30' ; 30" est directement monté et verrouillé dans les empreintes 17' du boîtier 10' avec un montage de type baïonnette. Le récepteur de jus inférieur 45' est bloqué en rotation par l'échancrure 11'a et en translation par le filtre 30' ; 30", de sorte qu'il est correctement maintenu en place sur le boîtier 10'.

Le couvercle 41' est monté directement sur le filtre 30'; 30", par l'intermédiaire des ergots secondaires 35' ; 35" du filtre 30' ; 30" qui coopèrent avec des nervures 55' du couvercle 41'. Le couvercle 41' est ainsi verrouillé avec un montage de type baïonnette sur le filtre 30' ; 30".

Une tête de pressage 70' entraînée en rotation par le moteur 9 est agencée de manière amovible dans le filtre 30' ; 30". La tête de pressage 70' comprend une vis de pressage 20'.

Le filtre 30' ; 30" présente une ouverture 36' ; 36" pour la mise en place de la tête de pressage 70'. L'ouverture 36' ; 36" est agencée en regard du couvercle 41'. Ainsi, le couvercle 41' est assemblé et verrouillé avec le filtre 30' ; 30" pour former une enceinte de filtration contenant la tête de pressage 70'. Le filtre 30' ; 30" comporte une sortie de déchage de résidus 31' ; 31 " débouchant au dessus de l'échancrure 11b du boîtier 10'.

La tête de pressage 70' disposée dans l'enceinte de travail 40' est entraînée en rotation par l'axe 15.

L'appareil illustré sur les figures 4 et 5 diffère de l'appareil illustré sur la figure 3 en ce que la tête de pressage 70' entraînée en rotation par le moteur 9 comprend une vis de pressage 20' et un disque de coupe 80' intégrés. En d'autres termes la vis de pressage 20' et le disque de coupe 80' appartiennent à un même outil de travail rotatif.

L'appareil illustré sur les figures 4 et 5 comporte un circuit de commande du moteur 9 d'entraînement avec un coupe-circuit 8 agencé dans le boîtier 10'. Le coupe-circuit 8 est actionné par des moyens de commande coopérant avec le couvercle 41'. Dans l'exemple de réalisation illustré sur la figure 5, les moyens de commande sont une tige 7 agencée sur l'enceinte de travail 40', plus particulièrement dans la paroi du déflecteur de jus 44'. La tige 7 actionne le coupe circuit 8 formé par un interrupteur autorisant l'alimentation du moteur 9 entrainant l'axe de rotation 15 lorsque le couvercle 41' est correctement verrouillé. A titre de variante, la tige 7 pourrait notamment être agencée dans une paroi latérale du filtre 30 ; 30'.

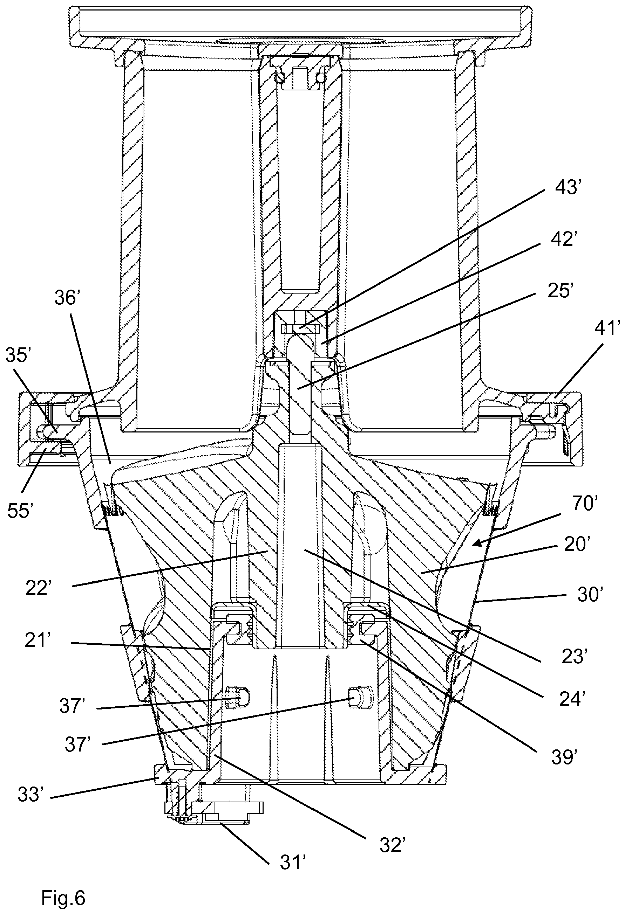

La figure 6 illustre l'enceinte de filtration formée par le couvercle 41' assemblé et verrouillé avec le filtre 30', contenant la tête de pressage 70'. Les nervures 55' du couvercle 41' sont assemblées par baïonnette avec les ergots secondaires 35' du filtre 30'. La vis de pressage 20' est disposée dans le filtre 30'. La vis de pressage 20' présente une cavité axiale inférieure 21' coiffant le bossage 32' du filtre 30. La sortie de déchage de résidus 31' est agencée entre le bossage 32' et la paroi latérale 33' du filtre 30'. Les ergots primaires 37' du filtre 30' sont agencés à l'intérieur du bossage 32'. Un joint annulaire 38' est monté dans une ouverture supérieure du bossage 32'. La vis de pressage 20' présente un moyeu 22' agencé dans la cavité axiale inférieure 21'. Le moyeu 22' présente un organe d'entrainement 23' prévu pour être entrainé en rotation par l'axe 15' du boîtier 10'. Une pièce annulaire 24' agencée dans la cavité axiale inférieure 21' autour du moyeu 22' est insérée dans l'ouverture interne du joint annulaire 38' lorsque la vis de pressage 20' est en place dans le filtre 20'. La vis de pressage 20' comporte un organe de guidage axial 25' monté dans un palier 42' du couvercle 41'. Plus particulièrement, l'organe de guidage axial 25' porte contre une surface d'appui 43' agencée au fond du palier 42'. L'organe de guidage axial 25' et la surface d'appui 43' sont avantageusement métalliques, et par exemple réalisés en acier inoxydable.

A titre de variante, l'enceinte de travail 40 ; 40' ne comporte pas nécessairement un déflecteur de jus 44 ; 44' indépendant du récepteur de jus inférieur 45 ; 45' et du couvercle 41 ; 41'. Le déflecteur de jus 44 ; 44' peut notamment être rapporté au couvercle 41 ; 41', ou encore être relié au récepteur de jus inférieur 45 ; 45' pour former un récipient de travail.

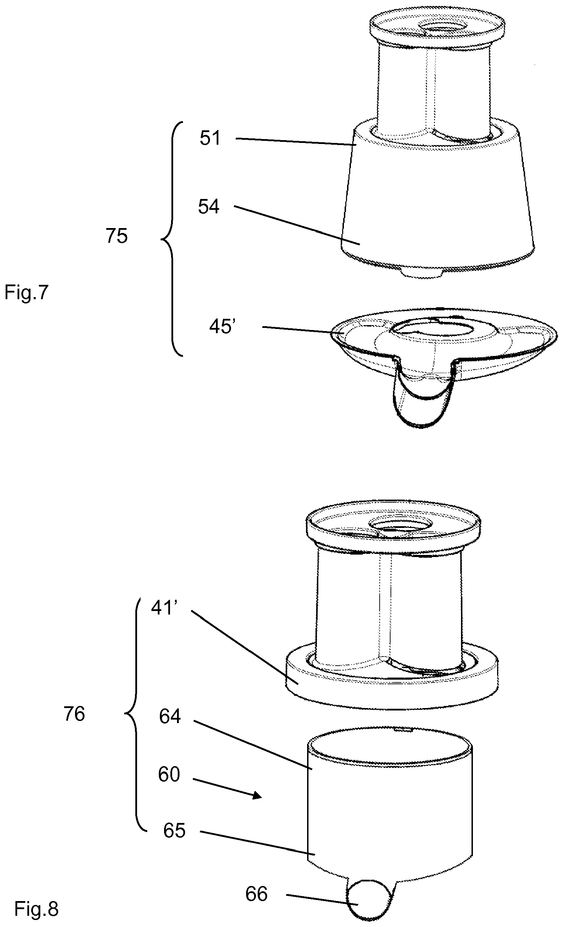

La figure 7 illustre un couvercle 51 intégrant un déflecteur de jus 54. Le couvercle 51 peut être utilisé avec le récepteur de jus inférieur 45 ; 45' pour former une enceinte de travail 75 logeant l'un des filtres 30 ; 30' ; 30". Le filtre 30 ; 30' ; 30" est alors verrouillé avec le couvercle 51. Le déflecteur de jus 54 est posé sur le récepteur de jus inférieur 45 ; 45'.

La figure 8 illustre un récipient de travail 60 intégrant un déflecteur de jus 64 et un récepteur de jus inférieur 65 présentant au moins une sortie d'évacuation 66. Le récipient de travail 60 peut être utilisé avec le couvercle 41 ; 41' pour former une enceinte de travail 76 logeant l'un des filtres 30 ; 30' ; 30".

Selon un premier aspect de l'invention, le filtre 30 ; 30' ; 30" n'est pas nécessairement directement monté et verrouillé sur le boîtier 10 ; 10' pour être maintenu en position dans l'enceinte de travail 40 ; 75. Le filtre 30 ; 30' ; 30" maintenant la tête de pressage 70 ; 70' avec le couvercle 41 ; 41' peut être simplement bloqué en rotation sur le boîtier 10 ; 10', sans être retenu axialement.

Selon un deuxième aspect de l'invention, le filtre 30 ; 30' ; 30" ne comprend pas nécessairement des moyens de reprise d'effort agencés pour reprendre des efforts appliqués sur le couvercle 41 ; 41' par la tête de pressage 70 ; 70'. L'enceinte de travail 40 ; 76 peut alors notamment comporter un récipient de travail 60 sur lequel est verrouillé le couvercle 41 ; 41', le filtre 30 ; 30' ; 30" pouvant être directement monté et verrouillé sur le boîtier 10 ; 10' pour être maintenu en position dans l'enceinte de travail 40 ; 76. Si désiré, le couvercle 41 ; 41' est directement monté et verrouillé sur le récipient de travail 60 pour être maintenu en position fermée sur l'enceinte de travail 40 ; 76 maintenue en place sur le boîtier 10 ; 10' par le filtre 30 ; 30' ; 30".

Ainsi le filtre 30 ; 30' ; 30" agencé dans l'enceinte de travail 40 ; 40' ; 75 peut être verrouillé ou non avec le boîtier 10 ; 10', lorsque le filtre 30 ; 30' ; 30" est verrouillé avec le couvercle 41 ; 41' ; 51 ; le filtre 30 ; 30' ; 30" agencé dans l'enceinte de travail 40 ; 40' ; 76 peut être verrouillé ou non avec avec le couvercle 41 ; 41', lorsque le filtre 30 ; 30' ; 30" est verrouillé avec le boîtier 10 ; 10'.

A titre de variante, le couvercle 41 ; 41' ; 51 n'est pas nécessairement monté directement sur le filtre 30; 30'; 30". Le couvercle 41 ; 41'; 51 pourrait notamment être verrouillé avec le filtre 30 ; 30' ; 30" en utilisant une bague de verrouillage, si désiré en intercalant un joint d'étanchéité.

A titre de variante la tête de pressage 70 ; 70' ne comprend pas nécessairement un disque de coupe 80 ; 80'.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

En particulier, il est fait référence à des ergots pour assurer le montage du filtre et du couvercle, mais on peut également envisager de réaliser cette fonction avec un montage de type vis-écrou avec une liaison par filet hélicoïdal, ou un verrouillage par bouton poussoir. Enfin, on peut envisager d'intercaler un organe de découpe entre la goulotte et la vis de pressage.

## Revendications

1. Appareil électroménager de préparation culinaire comportant un boîtier (10; 10') logeant un moteur (9) et supportant une enceinte de travail (40 ; 40' ; 75 ; 76) comportant un couvercle (41 ; 41' ; 51), l'enceinte de travail (40 ; 40' ; 75 ; 76) contenant un filtre (30 ; 30' ; 30") amovible, une tête de pressage (70 ; 70') entraînée en rotation par le moteur (9) étant agencée de manière amovible dans le filtre (30 ; 30' ; 30"), la tête de pressage (70 ; 70') comprenant une vis de pressage (20 ; 20'), le filtre (30 ; 30' ; 30") présentant une ouverture (36 ; 36' ; 36") pour la mise en place de la vis de pressage (20 ; 20') dans le filtre (30 ; 30' ; 30"), l'ouverture (36 ; 36' ; 36") étant agencée en regard du couvercle (41 ; 41' ; 51), **caractérisé en ce que** le filtre (30 ; 30' ; 30") est bloqué en rotation sur le boîtier (10 ; 10') et **en ce que** le couvercle (41 ; 41' ; 51) est assemblé et verrouillé avec le filtre (30 ; 30' ; 30") pour former une enceinte de filtration contenant la tête de pressage (70 ; 70').

2. Appareil électroménager selon la revendication 1, **caractérisé en ce que** le couvercle (41 ; 41' ; 51) est monté directement sur le filtre (30 ; 30' ; 30").

3. Appareil électroménager selon l'une des revendications 1 ou 2, **caractérisé en ce que** le filtre (30 ; 30' ; 30") est verrouillé et monté directement sur le boîtier (10 ; 10') pour un maintien en position du filtre (30 ; 30' ; 30") dans l'enceinte de travail (40 ; 40' ; 75 ; 76).

4. Appareil électroménager selon l'une des revendications 1 à 3, **caractérisé en ce que** l'enceinte de travail (40 ; 40' ; 75 ; 76) est directement posée sur le boîtier (10 ; 10').

5. Appareil électroménager selon l'une des revendications 1 à 4, **caractérisé en ce que** l'enceinte de travail (40 ; 40' ; 75 ; 76) comporte au moins une sortie d'évacuation (45a, 45b ; 45'a, 45'b ; 66).

6. Appareil électroménager selon la revendication 5, **caractérisé en ce que** la ou au moins l'une des sorties d'évacuation (45a ; 45'a ; 66) est agencée à l'extérieur du filtre (30 ; 30' ; 30").

7. Appareil électroménager selon la revendication 5 ou 6, **caractérisé en ce que** ladite au moins une sortie d'évacuation (45a ; 45'a ; 66) est en saillie et **en ce que** le boîtier (10 ; 10') comporte au moins une échancrure (11a ; 11'a) logeant au moins partiellement ladite au moins une sortie d'évacuation (45a ; 45'a ; 66).

8. Appareil électroménager selon l'une des revendications 5 à 7, **caractérisé en ce que** l'enceinte de travail (40 ; 40') comporte un récepteur de jus inférieur (45 ; 45') posé sur le boîtier (10 ; 10') et un déflecteur de jus (44 ; 44') posé sur le récepteur de jus inférieur (45 ; 45').

9. Appareil électroménager selon l'une des revendications 1 à 8, **caractérisé en ce que** l'enceinte de travail (75) comporte un récepteur de jus inférieur (45 ; 45') posé sur le boîtier (10 ; 10') et un déflecteur de jus (54) rapporté au couvercle (51).

10. Appareil électroménager selon l'une des revendications 1 à 9, **caractérisé en ce que** le filtre (30 ; 30' ; 30") comporte une embase et une zone de fixation sur le boîtier (10 ; 10') surélevée par rapport à l'embase, et **en ce que** la vis de pressage (20 ; 20') comporte un évidement central qui recouvre la zone de fixation du filtre (30 ; 30' ; 30").

11. Appareil électroménager selon l'une des revendications 1 à 10, **caractérisé en ce qu'**il comporte un circuit de commande du moteur (9) d'entraînement avec un coupe-circuit (8) et **en ce que** le coupe-circuit (8) est actionné par des moyens de commande coopérant avec le couvercle (41 ; 41' ; 51).

12. Appareil électroménager selon la revendication 11, **caractérisé en ce que** les moyens de commande sont une tige (7) agencée sur le filtre (30 ; 30' ; 30") ou sur l'enceinte de travail (40 ; 40' ; 75 ; 76).

13. Appareil électroménager selon l'une des revendications 1 à 12, **caractérisé en ce que** le couvercle (41 ; 41' ; 51) comporte une goulotte d'introduction d'aliments.

## Patentansprüche

1. Elektrisches Haushaltsgerät zur Nahrungsmittelzubereitung, das ein Gehäuse (10 ; 10') aufweist, in dem ein Motor (9) aufgenommen ist und einen Arbeitsbehälter (40 ; 40' ; 75 ; 76) trägt, der eine Abdeckung (41 ; 41' ; 51) aufweist, wobei der Arbeitsbehälter (40 ; 40' ; 75 ; 76) einen entfernbaren Filter (30 ; 30' ; 30") enthält, wobei ein Presskopf (70 ; 70'), der durch den Motor (9) in Drehung angetrieben wird, entfernbar in dem Filter (30 ; 30' ; 30") angeordnet ist, wobei der Presskopf (70 ; 70') eine Pressschraube (20 ; 20') umfasst, wobei der Filter (30 ; 30' ; 30") eine Öffnung (36 ; 36' ; 36") aufweist, um die Pressschraube (20 ; 20') in den Filter (30 ; 30' ; 30") einzusetzen; wobei die Öffnung (36 ; 36' ; 36") gegenüber der Abdeckung (41 ; 41' ; 51) angeordnet ist, **dadurch gekennzeichnet, dass** der Filter (30 ; 30' ; 30") in der Drehung auf dem Gehäuse (10 ; 10') blockiert ist, und dass die Abdeckung (41 ; 41' ; 51) mit dem Filter (30 ; 30' ; 30") zusammengebaut und verriegelt ist, um ein Filtergehäuse zu bilden, das den Presskopf (70; 70') enthält.

2. Elektrisches Haushaltsgerät nach Anspruch 1, **dadurch gekennzeichnet, dass** die Abdeckung (41 ; 41' ; 51) direkt auf dem Filter (30; 30' ; 30") angebracht ist.

3. Elektrisches Haushaltsgerät nach Anspruch 1 oder 2, **dadurch gekennzeichnet, dass** der Filter (30 ; 30' ; 30") direkt auf dem Gehäuse (10 ; 10') für eine Beibehaltung des Filters (30 ; 30' ; 30") in Position in dem Arbeitsbehälter (40 ; 40' ; 75 ; 76) verriegelt und angebracht ist.

4. Elektrisches Haushaltsgerät nach einem der Ansprüche 1 bis 3, **dadurch gekennzeichnet, dass** der Arbeitsbehälter (40 ; 40' ; 75 ; 76) direkt auf dem Gehäuse (10; 10') aufliegt.

5. Elektrisches Haushaltsgerät nach einem der Ansprüche 1 bis 4, **dadurch gekennzeichnet, dass** der Arbeitsbehälter (40 ; 40' ; 75 ; 76) mindestens einen Entleerungsausgang (45a ; 45b ; 45'a ; 45'b ; 66) aufweist.

6. Elektrisches Haushaltsgerät nach Anspruch 5, **dadurch gekennzeichnet, dass** der oder der mindestens eine der Entleerungsausgänge (45a ; 45'a ; 66) außerhalb des Filters (30; 30'; 30") angeordnet ist.

7. Elektrisches Haushaltsgerät nach Anspruch 5 oder 6, **dadurch gekennzeichnet, dass** der mindestens eine Entleerungsausgang (45a ; 45'a ; 66) hervorsteht, und dass das Gehäuse (10 ; 10') mindestens eine Einkerbung (11a ; 11'a) aufweist, in der mindestens teilweise der mindestens eine Entleerungsausgang (45a ; 45'a ; 66) untergebracht ist.

8. Elektrisches Haushaltsgerät nach einem der Ansprüche 5 bis 7, **dadurch gekennzeichnet, dass** der Arbeitsbehälter (40 ; 40') einen unteren Saftauffangbehälter (45 ; 45'), der auf dem Gehäuse (10 ; 10') aufliegt, und einen Saftableiter (44 ; 44') aufweist, der auf den unteren Saftauffangbehälter (45 ; 45') aufliegt.

9. Elektrisches Haushaltsgerät nach einem der Ansprüche 1 bis 8, **dadurch gekennzeichnet, dass** der Arbeitsbehälter (75) einen unteren Saftauffangbehälter (45 ; 45'), der auf dem Gehäuse (10 ; 10') liegt, und einem Saftableiter (54) aufweist, der an der Abdeckung (51) angestückelt ist.

10. Elektrisches Haushaltsgerät nach einem der Ansprüche 1 bis 9, **dadurch gekennzeichnet, dass** der Filter (30 ; 30' ; 30") einen Sockel und einen Befestigungsbereich auf dem Gehäuse (10 ; 10') aufweist, das mit Bezug auf den Sockel angehoben ist, und dass die Pressschraube (20 ; 20') eine zentrale Ausnehmung aufweist, die den Befestigungsbereich des Filters (30 ; 30' ; 30") abdeckt.

11. Elektrisches Haushaltsgerät nach einem der Ansprüche 1 bis 10, **dadurch gekennzeichnet, dass** es eine Steuerschaltung des Antriebsmotors (9) mit einem Stromunterbrecher (8) umfasst, und dass der Stromunterbrecher (8) durch Steuermittel betätigt wird, die mit der Abdeckung (41; 41' ; 51) zusammenwirken.

12. Elektrisches Haushaltsgerät nach Anspruch 11, **dadurch gekennzeichnet, dass** die Steuermittel eine Stange (7) sind, die auf dem Filter (30 ; 30' ; 30") oder auf dem Arbeitsbehälter (40; 40' ; 75 ; 76) angeordnet ist.

13. Elektrisches Haushaltsgerät nach einem der Ansprüche 1 bis 12, **dadurch gekennzeichnet, dass** die Abdeckung (41 ; 41' ; 51) eine Rinne zur Einführung von Nahrungsmitteln aufweist.

## Claims

1. Electrical food preparation device comprising a unit (10; 10') housing a motor (9) and supporting a work chamber (40; 40'; 75; 76) comprising a cover (41; 41'; 51), the work chamber (40; 40'; 75; 76) containing a removeable filter (30; 30'; 30"), a pressing head (70; 70') driven in rotation by the motor (9) being arranged in a removeable manner in the filter (30; 30'; 30"), the pressing head (70; 70') comprising a pressing screw (20; 20'), the filter (30; 30'; 30") having an opening (36; 36'; 36") for the setting in place of the pressing screw (20; 20') in the filter (30; 30'; 30"), the opening (36; 36'; 36") being arranged opposite the cover (41; 41'; 51), **characterised in that** the filter (30; 30'; 30") is locked in rotation on the unit (10; 10') and **in that** the cover (41; 41'; 51) is assembled and locked with the filter (30; 30'; 30") in order to form a filtration chamber containing the pressing head (70; 70').

2. Electrical device according to claim 1, **characterised in that** the cover (41; 41'; 51) is mounted directly on the filter (30; 30'; 30").

3. Electrical device according to one of claims 1 or 2, **characterised in that** the filter (30; 30'; 30") is locked and mounted directly on the unit (10; 10') for a maintaining of the filter (30; 30'; 30") in the work chamber (40; 40'; 75; 76).

4. Electrical device according to one of claims 1 to 3, **characterised in that** the work chamber (40; 40'; 75; 76) is directly placed on the unit (10; 10').

5. Electrical device according to one of claims 1 to 4, **characterised in that** the work chamber (40; 40'; 75; 76) comprises at least one outlet (45a, 45b; 45'a, 45'b; 66).

6. Electrical device according to claim 5, **characterised in that** the or at least one of the outlets (45a; 45'a; 66) is arranged outside the filter (30; 30'; 30").

7. Electrical device according to claim 5 or 6, **characterised in that** said at least one outlet (45a; 45'a; 66) is projecting and **in that** the unit (10; 10') comprises at least one indentation (11a; 11'a) housing at least partially said at least one outlet (45a; 45'a; 66).

8. Electrical device according to one of claims 5 to 7, **characterised in that** the work chamber (40; 40') comprises a lower juice receiver (45; 45') placed on the unit (10; 10') and a juice deflector (44; 44') placed on the lower juice receiver (45; 45').

9. Electrical device according to one of claims 1 to 8, **characterised in that** the work chamber (75) comprises a lower juice receiver (45; 45') placed on the unit (10; 10') and a juice deflector (54) added on the cover (51).

10. Electrical device according to one of claims 1 to 9, **characterised in that** the filter (30; 30'; 30") comprises a base and a fastening zone on the unit (10; 10') that is raised with respect to the base, and **in that** the pressing screw (20; 20') comprises a central recess that covers the fastening zone of the filter (30; 30'; 30").

11. Electrical device according to one of claims 1 to 10, **characterised in that** it comprises a control circuit of the drive motor (9) with a circuit breaker (8) and **in that** the circuit breaker (8) is actuated by control means cooperating with the cover (41; 41';51).

12. Electrical device according to claim 11, **characterised in that** the control means are a rod (7) arranged on the filter (30; 30'; 30") or on the work chamber (40; 40'; 75; 76).

13. Electrical device according to one of claims 1 to 12, **characterised in that** the cover (41; 41'; 51) comprises a chute for introducing food.
